# DEMANDE DE BREVET EUROPEEN

(11) **EP 3 147 165 A1**
(43) Date de publication de la demande: **29.03.2017**
(21) Numéro de dépôt: 16188992.8
(22) Date de dépôt: 15.09.2016
(51) Int. Cl.: B60S 1/38, B60S 1/40

(54) **ORGANE D'ESSUIE-GLACE COMPRENANT UN CAPOT ARTICULÉ**

(30) Priorité: 23.09.2015 FR 1558970
(71) Demandeur: Valeo Systèmes d'Essuyage, 78322 Le Mesnil Saint Denis (FR)
(72) Inventeur: HOUSSAT, Stéphane, 63112 BLANZAT (FR); POTON, Eric, 63430 Pont du Château (FR); GAUCHER, Vincent, 63720 ENNEZAT (FR)
(74) Mandataire: Callu Danseux, Violaine

(57) **Abrégé**

Organe (2) d'essuie-glace, notamment de balai d'essuie-glace, comprenant un corps (2') et un capot (28a) articulé et déplaçable entre deux positions (P1,P3) vis-à-vis du corps (2'), caractérisé en ce qu'il comprend des moyens de butée (30,31 a,31 b,27b,283a2') définissant une position de fin de course (P3) du capot (28a).

## Description

### DOMAINE TECHNIQUE

La présente invention concerne un organe d'essuie-glace, et notamment de balai d'essuie-glace, comprenant un capot articulé, en particulier un organe de connexion bras/balai muni d'un tel capot. Elle a également pour objet un balai d'essuie-glace muni dudit organe.

### ETAT DE L'ART

Typiquement, un balai d'essuie-glace d'une vitre telle que le parebrise d'un véhicule automobile comprend une lame d'essuyage, en général en caoutchouc, destinée à frotter contre la vitre du véhicule pour évacuer de l'eau en l'amenant en dehors du champ de vision du conducteur. Le balai comporte en outre une vertèbre longitudinale qui rigidifie la lame d'essuyage, de manière à favoriser l'application de cette lame sur le pare-brise, ainsi qu'une monture de support de la vertèbre et de la lame. Le balai comporte également un organe longitudinal de couverture comportant un déflecteur aérodynamique supérieur destiné à améliorer le plaquage du balai sur le pare-brise et donc la performance aérodynamique du système.

Le balai est rattaché à un bras par un ensemble constitué d'un connecteur mécanique et d'un adaptateur. Le connecteur est une pièce qui est fixée directement sur la structure du balai, l'adaptateur étant une pièce intermédiaire qui permet la fixation du connecteur sur le bras de l'essuie-glace. Ces deux pièces sont reliées l'une à l'autre par un axe transversal qui autorise leur rotation relative.

Lorsque le balai est destiné à être rattaché à un bras de type crochet, le connecteur est muni d'une fenêtre par laquelle passe l'extrémité du bras. La fenêtre doit être suffisamment longue pour pouvoir y insérer l'adaptateur puis le bras sur lequel ce dernier est fixé. Toutefois, après la mise en place de ces éléments, l'ouverture restante de la fenêtre se révèle néfaste, autant pour des raisons esthétiques que pour des raisons aérodynamiques, le creux de la fenêtre pouvant créer des turbulences dans l'air qui circule sur le pare-brise. Il est ainsi connu d'installer un ou plusieurs capots de fermeture articulés avec le connecteur, typiquement par rotation, et qui viennent coiffer la fenêtre et refermer la face supérieure du connecteur, pour former un connecteur capoté.

Lors d'une ouverture trop grande du capot, par exemple lors d'une ouverture rapide ou brutale, l'articulation du capot peut être endommagée, voire cassée, ce qui peut rendre le capot inutilisable.

La présente invention vise à remédier à ces inconvénients, en proposant un organe de balai d'essuie-glace comprenant un capot articulé, et dans lequel l'articulation du capot est sécurisée.

### EXPOSE DE L'INVENTION

L'invention a ainsi pour objet un organe d'essuie-glace, notamment de balai d'essuie-glace, comprenant un corps et un capot articulé et déplaçable entre deux positions extrêmes vis-à-vis du corps.

L'organe d'essuie-glace selon l'invention comprend des moyens de butée définissant une position de fin de course du capot, ladite position de fin de course étant intermédiaire entre les deux positions extrêmes.

Ainsi, avantageusement, les moyens de butée permettent de bloquer la course du capot, dans le sens de l'ouverture du capot, et dans une position intermédiaire entre les deux positions d'extrémité entre lesquelles se déplacerait le capot en l'absence de tels moyens de butée. Ce blocage intermédiaire du capot permet de limiter la course du capot et ainsi d'éviter d'endommager l'articulation du capot.

Le blocage de la course du capot peut s'effectuer par tout moyen de butée approprié, par exemple par appui du capot sur une butée placée à l'extérieur ou à l'intérieur du corps, ou encore sur une butée disposée sur un axe de rotation du capot.

Le corps peut comprendre une fenêtre destinée à être recouverte au moins partiellement par le capot et prolongée, par exemple longitudinalement, par une découpe dans laquelle est positionné un axe de rotation du capot.

Dans un premier mode de réalisation, les moyens de butée comprennent au moins une butée en saillie sur le corps.

Ladite au moins une butée en saillie peut être disposée à distance de la découpe.

Ladite au moins une butée en saillie peut être disposée du côté opposé à la fenêtre.

Dans un deuxième mode de réalisation, les moyens de butée comprennent un bras du capot coopérant avec un moyen de butée du corps.

Le bras peut présenter une extrémité recourbée apte à venir en appui contre ou sous le moyen de butée du corps lors de l'ouverture du capot.

Ledit moyen de butée du corps peut être disposé à l'intérieur de la fenêtre, sur une paroi intérieure du corps.

Le capot peut être muni de deux bras latéraux coopérant chacun avec un moyen de butée du corps.

Dans un troisième mode de réalisation, les moyens de butée comprennent des moyens de butée d'un élément d'articulation rotatif du capot coopérant avec des moyens de butée d'un axe de rotation du capot.

L'axe de rotation du capot peut comprendre une portion cylindrique et des moyens de butée en saillie sur la portion cylindrique.

L'axe de rotation du capot peut comprendre une portion cylindrique et deux butées disposées chacune à une extrémité latérale de l'axe.

Le capot peut comprendre un élément d'articulation rotatif muni d'une première portion cylindrique disposée entre les deux butées de l'axe de rotation et d'une deuxième portion cylindrique apte à venir en butée contre les deux butées de l'axe de rotation.

Chaque butée de l'axe de rotation peut comprendre une première face, située du côté de la découpe et sensiblement orthogonale à l'axe longitudinal de la fenêtre, ladite première face étant destinée à bloquer en rotation une surface d'extrémité de la deuxième portion cylindrique dans le sens de l'ouverture du capot.

Chaque butée de l'axe de rotation peut comprendre en outre une deuxième face, située du côté de la fenêtre et sensiblement orthogonale à l'axe longitudinal de la fenêtre, ladite deuxième face étant destinée à bloquer en rotation l'autre surface d'extrémité de la deuxième portion cylindrique dans le sens de la fermeture du capot.

L'organe peut être un organe de connexion du balai à un bras d'essuie-glace. L'organe peut en particulier être une monture centrale d'un balai plat caréné d'essuie-glace. On entend par balai plat caréné, un balai plat équipé d'un carénage. On entend par carénage, un équipement extérieur en général profilé.

L'invention a également pour objet un balai d'essuie-glace comprenant un organe décrit ci-dessus.
Le balai d'essuie-glace peut comprendre un carénage comprenant deux capots d'extrémité et une monture centrale qui est située entre les deux capots d'extrémité, chaque capot d'extrémité étant articulé par rapport à la monture centrale.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une vue schématique en perspective d'un balai plat caréné, à l'état libre sans contrainte,
- la figure 2 est une vue schématique en perspective du balai de la figure 1 lorsqu'il est en appui sur une vitre en particulier d'un véhicule,
- la figure 3 est une vue schématique en perspective éclatée du balai de la figure 1,
- la figure 4 est une vue schématique en perspective d'une monture du balai,
- la figure 5 est une vue à plus grande échelle d'une partie de la monture de la figure 4 et montre des moyens de liaison et de rigidification amovibles,
- la figure 6 correspond à la figure 5 et montre une étape de préparation de la monture dans laquelle un des moyens de liaison et de rigidification a été retiré,
- la figure 7 est une vue schématique en perspective d'une monture capotée du balai,
- les figures 8 à 10, et 13 sont des vues schématiques partielles en perspective de la monture capotée de la figure 7, les figures 11 et 14 sont des vues schématiques en perspective de capotages de cette monture capotée, la figure 12 est une vue de dessus de la monture seule dépourvue de capot,
- la figure 15 est une vue partielle en perspective d'une monture capotée de l'état de la technique,
- les figures 16 et 17 sont des vues partielles en perspective d'une monture capotée selon l'invention, conformément à un premier mode de réal isation,
- la figure 18 est une vue partielle en perspective d'une monture capotée selon l'invention, conformément à un deuxième mode de réalisation, et
- les figures 19 à 22 sont des vues partielles en perspective d'une monture capotée selon l'invention, conformément à un troisième mode de réalisation.

### DESCRIPTION DETAILLEE

Dans la description qui suit, les dénominations longitudinales ou latérales se réfèrent à l'orientation du balai d'essuie-glace selon l'invention. La direction longitudinale correspond à l'axe principal du balai dans lequel il s'étend, alors que les orientations latérales correspondent à des droites concourantes, c'est-à-dire qui croisent la direction longitudinale, notamment perpendiculaires à l'axe longitudinal du balai dans son plan de rotation. Pour les directions longitudinales, les dénominations extérieure ou intérieure s'apprécient par rapport au point de fixation du balai sur un bras porte-balai, la dénomination intérieure correspondant à la partie où le bras et un demi-balai s'étendent. Enfin, les directions référencées comme supérieures ou inférieures correspondent à des orientations perpendiculaires au plan de rotation du balai d'essuie-glace, la dénomination inférieure contenant le plan du pare-brise.

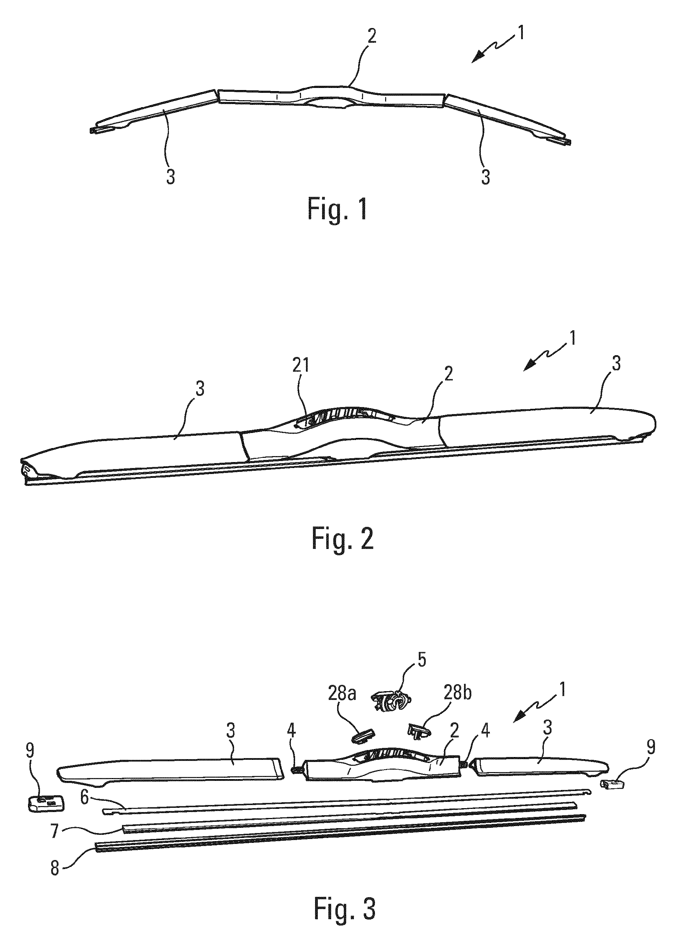

En référence aux figures 1 à 6, les éléments identiques ou fonctionnellement équivalents sont repérés par des chiffres de référence identiques.

Il est illustré à la figure 1 un balai 1 d'essuie-glace, en particulier d'un pare-brise de véhicule automobile, le balai 1 étant un balai plat caréné, c'est-à-dire un balai plat équipé d'un carénage, le balai plat caréné 1 étant ici en position libre dans l'espace, sans contrainte.

La partie supérieure du balai 1 est formée par le carénage qui comporte une forme aérodynamique qui défléchit, vers le haut, l'air qui arrive sur le pare-brise. Le carénage forme ainsi un déflecteur aérodynamique. La déviation de l'air précitée génère une force d'appui du balai 1 sur le pare-brise qui garantit, en association avec une seconde force d'appui générée par une pression du bras, un contact permanent sur le pare-brise et, donc un essuyage fiable.

Ce carénage a sensiblement la forme d'un dièdre formé de deux parois longitudinales qui se rejoignent en partie supérieure au niveau d'une arête sommitale, la paroi avant ayant une forme aérodynamique creuse alors que la paroi arrière est sensiblement plane dans l'exemple représenté. L'intérieur du dièdre est creux de façon à laisser de l'espace pour y loger des éléments qui forment un bloc d'essuyage d'un balai plat, qui sera décrit en détail plus loin.

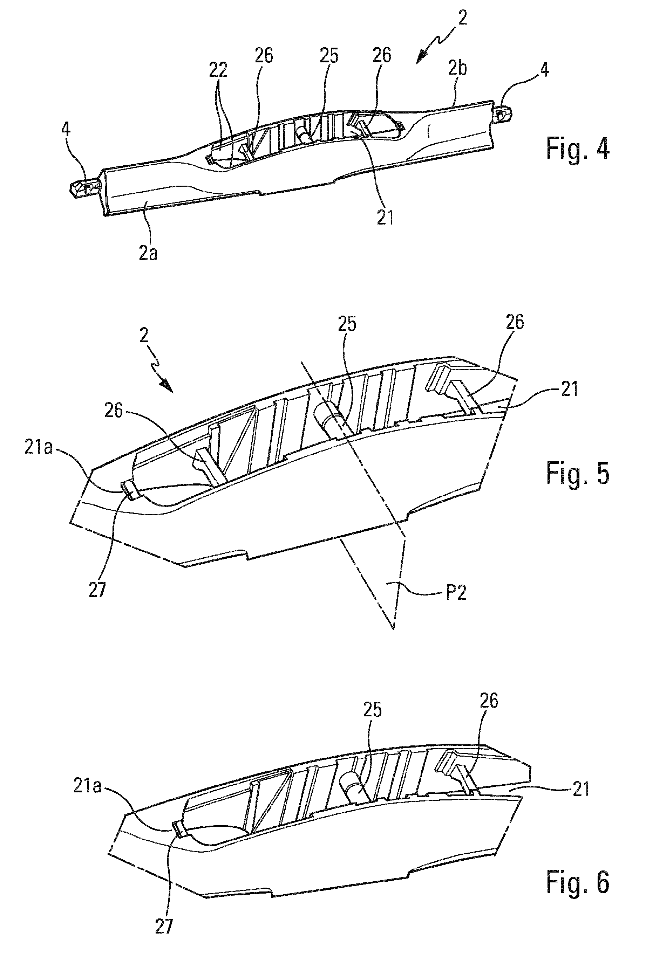

Le carénage est réalisé en trois parties, qui sont articulées les unes avec les autres. La partie centrale, dénommée ci-après monture centrale 2, remplit les fonctions de connecteur d'un balai plat non caréné, c'est-à-dire que c'est sur elle que s'accroche les divers éléments qui s'étendent tout le long du balai 1. A l'exception de son centre qui présente des parois verticales sensiblement parallèles pour pouvoir loger entre elles un adaptateur, cette monture centrale 2 présente la forme carénée en déflecteur aérodynamique décrite ci-dessus. Elle comprend ainsi deux parois latérales longitudinales 2a,2b (figure 4) dont les bords longitudinaux supérieurs sont reliés entre eux de façon à ce que lesdites parois forment sensiblement un dièdre. A cette monture centrale sont rattachées deux parties dans des positions longitudinales excentrées, dénommées ci-après capots d'extrémité 3. Ces deux capots ont, eux aussi et sur toute leur longueur, la forme carénée en déflecteur aérodynamique. Chaque capot 3 comprend ainsi deux parois latérales longitudinales dont les bords longitudinaux supérieurs sont reliés entre eux de façon à ce que lesdites parois forment sensiblement un dièdre.

Un premier capot d'extrémité 3 s'étend vers l'intérieur alors que le second s'étend vers l'extérieur. La liaison entre la monture centrale 2 et chacun des capots d'extrémité 3 est une articulation qui pivote autour d'un axe orienté selon une direction latérale ou transversale, de sorte que les deux capots d'extrémité 3 se déplacent dans un plan perpendiculaire au plan de rotation du balai. La cassure ainsi créée entre la monture centrale 2 et les capots d'extrémité 3 évite que les extrémités extérieure et intérieure du balai ne soient appliquées contre le pare-brise avec une pression plus faible que celle qui s'exerce au niveau de la monture centrale, du fait d'une distance plus grande de leur point d'appui par rapport au point d'accrochage du bras d'entraînement sur le balai.

La partie centrale de la monture centrale 2 présente une hauteur supérieure au reste du balai, du fait de sa fonction de connecteur, ce qui permet d'y loger les moyens de rattachement du balai au bras d'entraînement et en particulier un adaptateur.

La figure 2 montre le même balai 1 dans une position en appui contre une vitre, présentée ici par simplification sous la forme d'une surface plane. Les articulations entre la monture centrale 2 et les deux capots d'extrémité 3 sont refermées, c'est-à-dire que ces capots sont positionnés dans l'axe de la monture centrale, les surfaces supérieures de ces trois pièces formant une surface carénée continue. La partie centrale de la monture centrale 2 comporte une fenêtre 21 par laquelle passe l'extrémité d'un bras d'entraînement et comporte un axe transversal sur lequel vient se fixer l'adaptateur (non représenté) qui assure le rattachement du balai 1 au bras.

La figure 3 montre le balai 1 en vue éclatée. La monture centrale 2 comporte longitudinalement, de part et d'autre, deux moyens de liaison ou d'articulation qui comportent des doigts 4 qui s'étendent longitudinalement à partir du corps de la monture. Ces doigts 4 comportent un orifice destiné à recevoir un axe d'articulation porté par le capot d'extrémité 3 correspondant. La coopération de cet axe d'articulation avec l'orifice du doigt 4 permet la rotation du capot 3 par rapport à la monture centrale 2, dans un plan perpendiculaire au plan de rotation du balai 1.

En dessous de ces éléments sont représentés, respectivement, une vertèbre de rigidification 6, un organe de maintien ou de retenue 7 et une lame d'essuyage 8, l'ensemble de ces trois éléments formant ce qui sera appelé par la suite un bloc d'essuyage. La vertèbre de rigidification 6 a pour objet de servir de structure au balai en lui donnant une forme cintrée qui correspond au galbe moyen du pare-brise sur lequel le balai se déplace. Sa rigidité longitudinale permet, comme pour un balai plat classique, de maintenir une pression suffisante aux deux extrémités du balai, de sorte que l'essuyage s'effectue de façon uniforme sur toute la surface à balayer.

L'organe de maintien 7 constitue l'élément porteur, à la fois, de la vertèbre de rigidification 6 et de la lame d'essuyage 8.

La lame d'essuyage 8 est une lame classique en matériau élastomère, qui est portée par l'organe de maintien 7 et qui a pour objet de rester en contact permanent avec le pare-brise.

La figure 3 montre, en outre, deux embouts d'extrémité 9, qui ont pour fonction de réunir les trois éléments précédents à leur extrémité et de les bloquer longitudinalement. Chaque embout d'extrémité 9 possède par ailleurs une butée longitudinale contre laquelle vient s'appuyer une face d'appui portée par le capot d'extrémité 3 correspondant. Cette coopération de la butée longitudinale et de la face d'appui du capot empêchent les trois éléments du bloc d'essuyage de s'étendre longitudinalement lorsque le capot pivote par rapport à la monture centrale 2 et elle les oblige ainsi à se cintrer pour qu'ils suivent la courbure du pare-brise.

En se référant maintenant aux figures 4 à 6, on voit l'intérieur de la fenêtre 21 de la monture centrale 2, qui s'étend longitudinalement entre les parois latérales 2a,2b de cette monture et est délimité longitudinalement par deux parois parallèles 22. De part et d'autre de la fenêtre 21 s'étendent les parois longitudinales avant 2a et arrière 2b, en référence au sens de circulation de l'air. Un axe transversal d'articulation 25 relie les deux parois latérales parallèles 22, de façon à supporter l'adaptateur 5 qui se fixe dessus par encliquetage ou encliquetage élastique.

Du fait de l'allongement relativement grand de la fenêtre 21, les portions de parois latérales 22 situées au niveau de la fenêtre peuvent présenter une certaine fragilité lors de leur manipulation, il est alors avantageux de rajouter des moyens 26 de liaison et de rigidification entre les faces latérales internes 22 de la fenêtre 21, ici sous la forme de traverses 26 qui ont chacune une forme de barreau allongé. Telles que représentées, ces traverses 26 s'étendent parallèlement à l'axe d'articulation 25 en étant positionnées sensiblement à la même hauteur que cet axe, et sensiblement au milieu de la distance existant entre l'axe 25 et l'extrémité longitudinale de la fenêtre 21. Ces traverses 26 sont formées par des ponts de matière reliant les deux faces latérales 22. Elles sont ici du type amovible, c'est-à-dire qu'elles peuvent être retirées. Elles peuvent être cassables ou découpables ou démontables, elles peuvent notamment être déclipsées. Elles présentent ici des sections à casser, à savoir une zone de fragilité ou portion de faiblesse à chacune de leurs extrémités, de manière à pouvoir être rompues au niveau des faces 22, sans laisser d'excroissance qui interférerait avec la rotation de l'adaptateur 5. En effet la présence de deux traverses 26 sur une même monture centrale 2, qui correspond à une configuration en sortie de fabrication, n'est pas adaptée à la mise en service d'une telle monture centrale car l'une d'elles limiterait, de façon indue, la rotation de l'adaptateur 5. Il convient, lors du montage d'un balai d'essuie-glace de choisir dans quel sens cette monture va être installée sur le bras du balai. En fonction de ce choix, une des traverses 26 est cassée, ce qui donne la nécessaire liberté de rotation au bras et à son adaptateur 5 dans la monture centrale. Comme on le voit sur la figure 6, la seconde traverse est conservée, car n'interférant pas avec cette rotation. Il y a ainsi une simplification dans la production des montures centrales 2 et dans leur logistique puisque celle-ci est un modèle unique, qui s'adapte à tous les sens de montage d'un balai d'essuie-glace, moyennant la rupture préalable d'une des deux traverses 26. La présence des deux puis d'une seule traverse 26 donne la nécessaire rigidité aux parois latérales parallèles 22, tout d'abord lors du transport pour son acheminement vers le lieu de montage, puis lors de son utilisation sur un pare-brise. Les deux traverses 26 sont ici disposées de manière symétrique par rapport au plan transversal P2 passant sensiblement par le milieu de la fenêtre 21 et par l'axe 25.

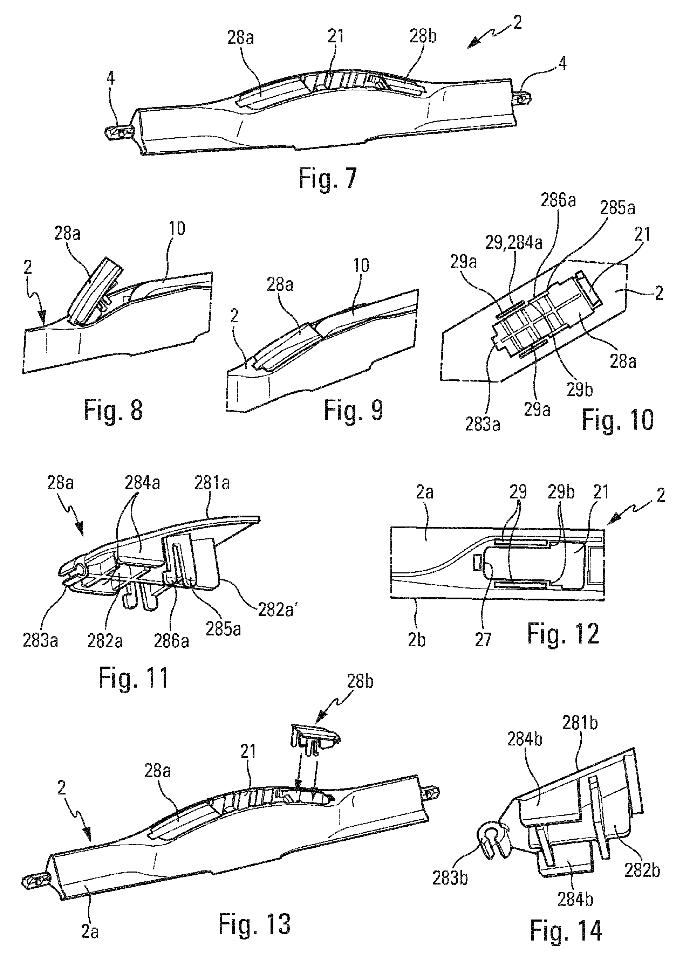

Par ailleurs, la fenêtre 21 présente à chacune de ses extrémités longitudinales une découpe 21 a, essentiellement transversale, qui prolonge longitudinalement la découpe de la fenêtre 21. Dans cette découpe 21 a est positionné un axe 27 orienté transversalement qui peut faire office d'axe de rotation ou axe de support à un capot de fermeture, comme cela sera explicité plus loin en référence aux figures 7 à 14.

Sur la figure 7 on voit une monture centrale 2 dans laquelle la fenêtre 21 est obturée partiellement par deux capots de fermeture 28a et 28b. En effet, alors que la fenêtre 21 doit être suffisamment longue pour pouvoir y insérer un adaptateur 5 puis le bras sur lequel ce dernier est fixé, son ouverture vers le haut se révèle néfaste après la mise en place de ces éléments, autant pour des raisons esthétiques que pour des raisons aérodynamiques, le creux de la fenêtre pouvant créer des turbulences dans l'air qui circule sur le pare-brise. Il est ainsi préconisé d'installer deux capots de fermeture 28a, 28b qui viennent coiffer la fenêtre 21 et qui referment partiellement la face supérieure de la partie centrale de la monture centrale 2. Compte tenu de la présence du bras et de l'adaptateur 5 qui ne présentent pas de symétrie selon un plan transversal, les deux extrémités de la fenêtre 21 ne sont pas identiques, ni symétriques. On distingue donc un capot de fermeture avant 28a qui se positionne vers l'extérieur par rapport au bras du balai et un capot de fermeture arrière 28b, qui se positionne du côté intérieur. Ainsi, un premier capotage 28a est configuré pour obturer une première partie d'extrémité longitudinale de la fenêtre 21 et le second capotage 28b est configuré pour obturer une seconde partie d'extrémité longitudinale de la fenêtre, opposée à la première partie.

La mise en place de ces capots peut être réalisée de deux façons différentes. Tels que représentés sur les figures, le capot avant 28a est monté mobile en rotation autour de l'axe 27 de la découpe avant 21 a, tandis que le capot arrière 28b est monté fixe sur l'axe 27 qui traverse la découpe arrière 21 a.

Les figures 8 et 9 montrent ainsi la capacité de rotation du capot avant 28a autour de son axe 27. Sur la figure 8 le capot avant 28a est soulevé et laisse apparaître l'espace longitudinal qui est libéré pour permettre l'insertion du bras 10 dans la fenêtre 21 et son passage autour de l'adaptateur 5. La figure 9 montre le capot avant 28a refermé et la continuité des surfaces entre la face supérieure de la monture centrale 2, le capot avant 28a et le bras 10 porteur du balai. Enfin, la figure 10 montre, en vue de dessous, le capot avant 28a en position dans la fenêtre 21.

La figure 11 montre de façon plus détaillée la forme du capot avant 28a. Il comporte une face supérieure 281 a dont la forme (ici non plane) est conformée pour prolonger la forme de la face supérieure de la monture centrale 2 et offrir une continuité aérodynamique entre ces deux éléments. La face inférieure 282a est formée par des raidisseurs qui sont croisés de façon à donner de la rigidité à la pièce et qui s'étendent verticalement jusqu'à rencontrer la face supérieure 281 a. A l'avant, c'est-à-dire vers l'extérieur du balai, la face supérieure 281a se termine par un cylindre transversal 283a qui est ouvert sur un secteur d'amplitude limitée. Ce cylindre a pour diamètre intérieur une valeur légèrement supérieure à celui de l'axe 27, de sorte que l'axe 27 puisse servir d'axe de rotation pour le capot avant ; le secteur d'ouverture de ce cylindre est tel que l'axe 27 puisse passer dans ce secteur par encliquetage élastique puis y reste maintenu après l'encliquetage. Enfin sur les côtés du capot avant 28a on voit deux pattes 284a orientées verticalement qui s'étendent à partir de la face supérieure 281 a. A l'arrière de ces deux pattes 284a s'étendent également verticalement deux secondes pattes 285a. Au niveau de chaque côté du capotage, entre les pattes 284a, 285a, s'étend en outre un crochet 286a s'étendant également verticalement. Les crochets 286a sont élastiquement déformables et sont destinés à coopérer par encliquetage élastique avec un moyen complémentaire de la monture 2.

Sur la figure 10, on voit les deux premières pattes 284a qui débouchent dans la fenêtre 21 et qui sont emboîtées dans des guides ou évidements 29 de la fenêtre 21. Ces guides sont formés, d'une part par les faces latérales 22 de la partie centrale de la monture centrale 2, et d'autre part par des cloisons 29a parallèles à ces faces, décalées vers l'intérieur de la fenêtre 21, ces cloisons 29a parallèles étant rattachées par des petites cloisons transversales 29b aux faces latérales 22 pour refermer l'évidement formant guide. Les premières pattes 284a servent à positionner le capot 28a dans la fenêtre 21. Les crochets 286a coopèrent avec les extrémités inférieures des cloisons 29b pour assurer le verrouillage du capot dans sa position de montage.

Par ailleurs, l'extrémité longitudinale de l'un des raidisseurs du capot 28a, opposée au cylindre 283a, forme un moyen 282a' d'appui et de retenue de l'adaptateur 5 et/ou du bras 10.

La figure 12 montre la fenêtre 21 dépourvue de capot arrière, la figure 14 montre le capot arrière 28b seul et la figure 13 montre le capot arrière 28b juste avant sa mise en place dans la fenêtre 21. Les éléments du capot arrière 28b ayant la même fonction que des éléments similaires du capot avant 28a sont désignés par les mêmes références numériques, la lettre a étant remplacée par une lettre b ; ils ne sont pas décrits à nouveau.

La figure 13 montre le sens dans lequel s'effectue la mise en place de ce capot. Alors que le capot avant 28a était rattaché à un axe 27 et mobile en rotation autour de lui, le capot arrière 28b est implanté par une translation verticale pour y être positionné par encliquetage de façon fixe. De ce fait, comme on peut le voir sur la figure 14, le cylindre 283b du capot arrière présente un secteur ouvert dont l'ouverture est orientée en direction du bas. La rotation autour de cet axe 27 est annihilée par la présence des premières pattes 284b dont le côté opposé au cylindre 283b coopère sur toute sa hauteur avec la petite cloison transversale 29b et bloque toute rotation. De ce fait, la présence de crochets n'est plus nécessaire. De même l'extrémité de la fenêtre 21, qui est illustrée sur la figure 12, est simplifiée par rapport à celle de la figure 10, et ne comporte qu'un guide 29 pour le logement des seules premières pattes 284b.

Bien que le capot arrière 28b ait été décrit comme étant monté fixe sur l'axe 27 qui traverse la découpe arrière, on peut également envisager d'utiliser un capot arrière 28b mobile en rotation, comme le capot avant 28a.

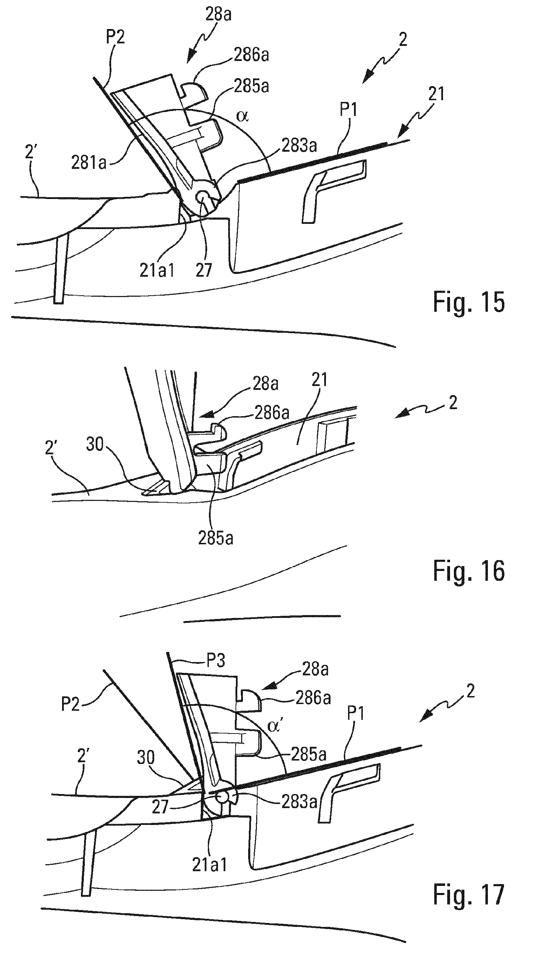

Tel qu'illustré à la figure 15, le capot avant 28a est mobile en rotation entre deux positions d'extrémité, à savoir une première position P1, qui est la position fermée du capot 28a, dans laquelle la face supérieure 281a du capot 28a est sensiblement alignée avec la surface supérieure de la fenêtre 21, et une position P2 dans laquelle le capot 28a est complètement ouvert, et dans laquelle la face supérieure 281 a du capot 28a est en appui contre la face arrière 21a1 de la découpe 21a, en particulier contre l'arête supérieure de la face 21a1, la face arrière 21a1 étant sensiblement orthogonale à l'axe longitudinal de la monture 2. L'angle entre les positions P1 et P2 est l'angle α.

Conformément à l'invention, la monture 2 est munie de moyens de butée définissant une position de fin de course du capot 28a, ladite position de fin de course étant intermédiaire entre la position fermée P1 et la position de complète ouverture P2. Les moyens de butée permettent de bloquer le capot 28a dans le sens de l'ouverture du capot 28a, c'est-à-dire lors de son éloignement de la fenêtre 21.

Comme représenté à la figure 15, le capot 28a est dans ce mode de réalisation uniquement pourvu des crochets 286a et des deux secondes pattes 285a, les premières pattes 284a ayant été ôtées. De plus, chaque seconde patte 285a est interposée entre le cylindre 283a et un crochet 286a.

Dans un premier mode de réalisation, tel qu'illustré sur les figures 16 et 17, les moyens de butée comprennent au moins une butée 30 en saillie sur le corps 2' de la monture 2, par exemple sur la surface supérieure du corps 2'. La butée 30 est disposée à proximité du capot 28a, à proximité de la fenêtre 21 et à distance de la découpe 21 a. La butée 30 se présente sous la forme d'une nervure sensiblement rectiligne, voire légèrement courbe, sur laquelle vient s'arc-bouter le capot 28a. La butée 30 est inclinée par rapport à la surface supérieure du corps 2', la longueur de la butée 30 et son angle d'inclinaison pouvant être réglés en fonction de la position de fin de course souhaitée du capot 28a. Pour plus de clarté, le capot 28a est représenté partiellement sur les figures 15 à 17.

Ainsi, grâce à la butée 30, la position de fin de course P3 du capot 28a est intermédiaire entre la position P1 et la position P2 (figure 17). On bloque l'ouverture du capot 28a selon un angle α' prédéfini inférieur à l'angle α et on protège ainsi l'élément d'articulation rotatif 283a du capot 28a.

Dans une variante de ce premier mode de réalisation, la butée 30, au lieu d'être en saillie de la monture 2, peut être incorporée au capot 28a, et notamment à sa surface supérieure 281 a.

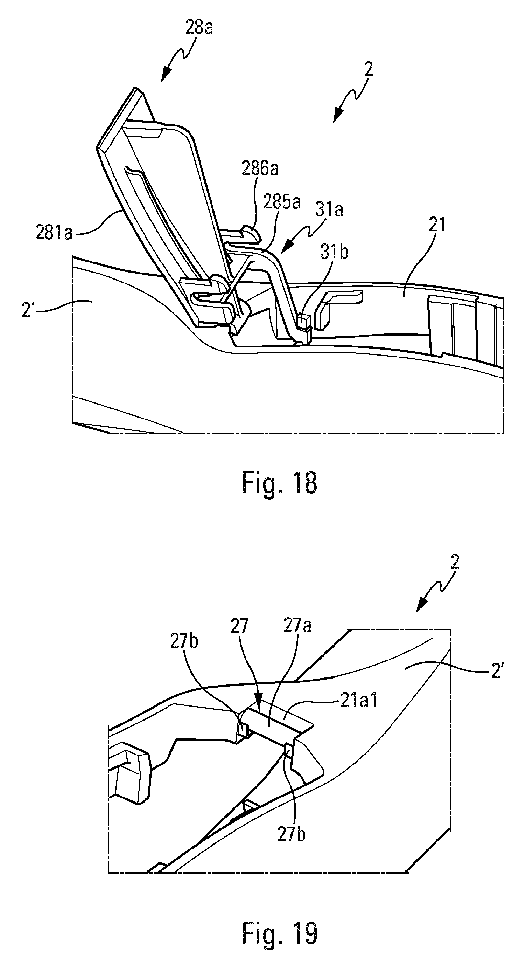

Dans un deuxième mode de réalisation, tel qu'illustré à la figure 18, et qui peut se combiner au premier mode de réalisation, les moyens de butée comprennent au moins une patte 31a (ou bras) du capot 28a coopérant avec une butée 31 b de la monture 2 pour bloquer la rotation du capot 28a. Le capot 28a peut comprendre deux pattes 31a disposées de chaque côté du capot 28a, chaque patte 31a étant reliée à une de ses extrémités à la face supérieure 281 a du capot 28a et coopérant à son autre extrémité avec une butée 31 b de la monture 2. Chaque patte 31 a constitue un élément d'accrochage en forme sensiblement de S qui vient en butée contre ou sous la butée 31 b lors de l'ouverture du capot 28a. Chaque patte 31a peut être un prolongement d'une seconde patte 285a du capot 28a de la figure 15. Chaque patte 31a peut ainsi comprendre trois parties : une patte 285a reliée au capot 28a, une partie centrale sensiblement rectiligne, et un crochet d'extrémité. La butée 31 b est avantageusement disposée sur une paroi latérale intérieure de la monture 2, à l'intérieur de la fenêtre 21 et sous la surface supérieure de la monture 2.

Ainsi, tandis que dans le premier mode de réalisation la butée 30 était située à l'extérieur de la monture 2, la butée 31 b du deuxième mode de réalisation est cette fois disposée à l'intérieur de la monture 2.

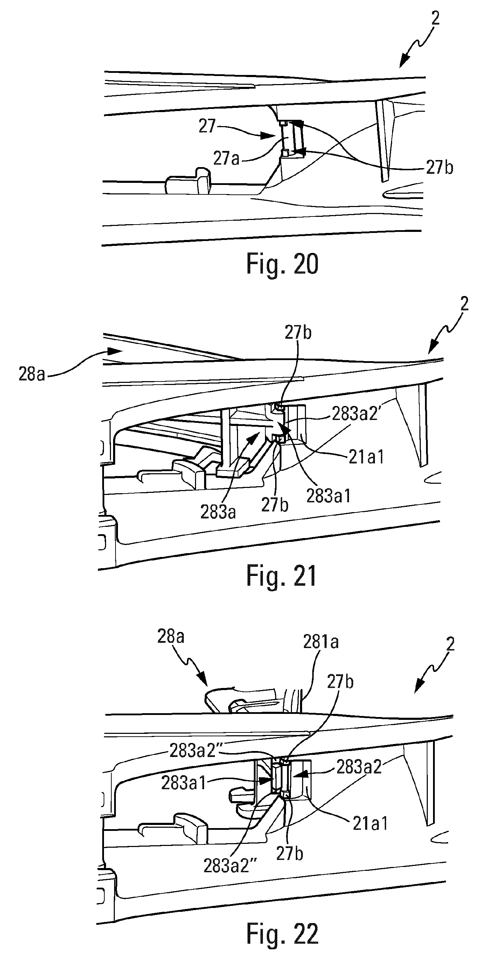

Dans un troisième mode de réalisation, tel qu'illustré sur les figures 19 à 22, et qui peut se combiner au premier et/ou au deuxième mode de réalisation, les moyens de butée sont associés à l'axe de rotation 27 du capot 28a. L'axe de rotation 27 comprend une partie cylindrique 27a destinée à assurer la rotation du capot 28a via le cylindre 283a, ainsi que des moyens de butée 27b en saillie de la partie cylindrique 27a et destinés à bloquer la rotation du capot 28a via le cylindre 283a. Les moyens de butée 27b comprennent avantageusement chacun une face arrière, située du côté de la découpe 21 a, et destinée à recevoir en appui une face d'extrémité 283a2' du cylindre 283a, ainsi qu'une face avant, située du côté de la fenêtre 21, et destinée à recevoir en appui une autre face d'extrémité 283a2" du cylindre 283a. Les butées 27b peuvent par exemple être de forme parallélépipédique, notamment parallélépipédique rectangle. Les moyens de butée peuvent comprendre deux butées 27b disposées chacune à une extrémité latérale de l'axe 27 (figures 19 et 20).

Le cylindre 283a est configuré pour à la fois permettre la rotation du capot 28a tant que ce dernier n'a pas atteint sa position de fin course et permettre son blocage une fois sa position de fin course atteinte. A cet effet, le cylindre 283a comprend une première portion cylindrique 283a1 et une deuxième portion cylindrique 283a2. La première portion cylindrique 283a1 est de largeur réduite, de manière à s'intercaler entre les deux butées 27b de l'axe de rotation 27, ce qui permet une rotation du cylindre 283a autour de l'axe 27. La deuxième portion cylindrique 283a2 présente une largeur supérieure à celle de la première portion cylindrique 283a1, de manière à venir en butée contre les butées 27b de l'axe de rotation 27.

La figure 21 illustre le capot 28a peu après son ouverture. La rotation du capot 28a s'effectue autour de l'axe 27, par rotation simultanée de la première portion cylindrique 283a1 et de la deuxième portion cylindrique 283a2. La rotation s'arrête lorsque l'extrémité 283a2' de la deuxième portion cylindrique 283a2 vient en contact avec les faces arrières verticales des butées 27b, définissant ainsi une position de fin de course du capot 28a sensiblement verticale. Le blocage du capot 28a en position de fin de course est ainsi réalisé avant que la face supérieure 281a du capot ne vienne en appui contre la face arrière 21 a1 de la découpe 21 (figure 22).

La deuxième portion cylindrique 283a2 comprend avantageusement, de l'autre côté de sa face d'extrémité 283a2', deux faces 283a2" qui viennent chacune en appui contre la face avant des butées 27b, située du côté de la fenêtre 21, de manière à bloquer la capot 28a dans sa position fermée. De cette manière, les deux faces d'appui des butées 27b permettent d'assurer à la fois le blocage du capot 28a lors de son ouverture, dans sa position de fin de course P3, puis lors de sa fermeture, dans sa position fermée P1.

Bien entendu, l'invention n'est pas limitée à un organe muni d'un capot articulé monté sur un balai plat caréné, l'organe muni d'un capot articulé selon l'invention pouvant être monté sur tout autre type de balai, le capot articulé visant à couvrir une ouverture dudit organe ou adjacente audit corps.

## Revendications

1. Organe (2) d'essuie-glace, notamment de balai d'essuie-glace (1), comprenant un corps (2') et un capot (28a) articulé et déplaçable entre deux positions extrêmes (P1,P2) vis-à-vis du corps (2'), **caractérisé en ce qu'**il comprend des moyens de butée (30,31 a,31 b,27b,283a2') définissant une position de fin de course (P3) du capot (28a), ladite position de fin de course (P3) étant intermédiaire entre les deux positions extrêmes (P1,P2).

2. Organe (2) selon la revendication 1, **caractérisé en ce que** le corps (2') comprend une fenêtre (21) destinée à être recouverte au moins partiellement par le capot (28a) et prolongée par une découpe (21 a) dans laquelle est positionné un axe de rotation (27) du capot (28a).

3. Organe (2) selon la revendication 1 ou 2, **caractérisé en ce que** lesdits moyens de butée comprennent au moins une butée (30) en saillie sur le corps (2').

4. Organe (2) selon la revendication 3, en liaison avec la revendication 2, **caractérisé en ce que** ladite au moins une butée (30) en saillie est disposée à distance de la découpe (21 a).

5. Organe (2) selon la revendication 4, **caractérisé en ce que** ladite au moins une butée (30) en saillie est disposée du côté opposé à la fenêtre (21).

6. Organe (2) selon l'une des revendications 1 à 5, **caractérisé en ce que** lesdits moyens de butée comprennent un bras (31a) du capot (28a) coopérant avec un moyen de butée (31 b) du corps (2').

7. Organe (2) selon la revendication 6, **caractérisé en ce que** le bras (31 a) présente une extrémité recourbée apte à venir en appui contre ou sous le moyen de butée (31 b) du corps (2') lors de l'ouverture du capot (28a).

8. Organe (2) selon la revendication 6 ou 7, en liaison avec la revendication 2, **caractérisé en ce que** ledit moyen de butée (31 b) du corps (2') est disposé à l'intérieur de la fenêtre (21), sur une paroi intérieure du corps (2').

9. Organe (2) selon l'une des revendications 6 à 8, **caractérisé en ce que** le capot (28a) est muni de deux bras latéraux (31 a) coopérant chacun avec un moyen de butée (31 b) du corps (2').

10. Organe (2) selon l'une des revendications 1 à 9, **caractérisé en ce que** lesdits moyens de butée comprennent des moyens de butée (283a2') d'un élément d'articulation rotatif (283a) du capot (28a) coopérant avec des moyens de butée (27b) d'un axe de rotation du capot (28a).

11. Organe (2) selon la revendication 10, **caractérisé en ce que** l'axe de rotation (27) du capot (28a) comprend une portion cylindrique (27a) et des moyens de butée (27b) en saillie sur la portion cylindrique (27a).

12. Organe (2) selon la revendication 11, **caractérisé en ce que** l'axe de rotation (27) du capot (28a) comprend une portion cylindrique (27a) et deux butées (27b) disposées chacune à une extrémité latérale de l'axe (27).

13. Organe (2) selon la revendication 12, **caractérisé en ce que** le capot (28a) comprend un élément d'articulation rotatif (283a) muni d'une première portion cylindrique (283a1) disposée entre les deux butées (27b) de l'axe de rotation (27) et d'une deuxième portion cylindrique (283a2) apte à venir en butée contre les deux butées (27b) de l'axe de rotation.

14. Organe (2) selon la revendication 13, en liaison avec la revendication 2, **caractérisé en ce que** chaque butée (27b) de l'axe de rotation (27) comprend une première face, située du côté de la découpe (21a) et sensiblement orthogonale à l'axe longitudinal de la fenêtre (21), ladite première face étant destinée à bloquer en rotation une surface d'extrémité (283a2') de la deuxième portion cylindrique (283a2) dans le sens de l'ouverture du capot (28a).

15. Organe (2) selon la revendication 14, **caractérisé en ce que** chaque butée (27b) de l'axe de rotation (27) comprend en outre une deuxième face, située du côté de la fenêtre (21) et sensiblement orthogonale à l'axe longitudinal de la fenêtre (21), ladite deuxième face étant destinée à bloquer en rotation l'autre surface d'extrémité (283a2") de la deuxième portion cylindrique (283a2) dans le sens de la fermeture du capot (28a).

16. Organe (2) selon l'une des revendications 1 à 15, **caractérisé en ce que** ledit organe est un organe de connexion du balai (1) à un bras d'essuie-glace.

17. Organe (2) selon la revendication 16, **caractérisé en ce que** ledit organe est une monture centrale (2) d'un balai plat caréné (1) d'essuie-glace.

18. Balai d'essuie-glace (1), **caractérisé en ce qu'**il comprend un organe (2) selon l'une des revendications 1 à 17.

19. Balai d'essuie-glace (1) selon les revendications 17 et 18, **caractérisé en ce qu'**il comprend un carénage comprenant deux capots d'extrémité (3) et une monture centrale (2) qui est située entre les deux capots d'extrémité, chaque capot d'extrémité étant articulé par rapport à la monture centrale.
